# FASCICULE DE BREVET EUROPEEN

(11) **EP 0 556 082 B1**
(45) Date de publication et mention de la délivrance du brevet: **19.06.1996**
(21) Numéro de dépôt: 93400204.9
(22) Date de dépôt: 28.01.1993
(51) Int. Cl.: B62D 1/28

(54) **Direction assistée hydraulique à rappel asservi et commande auxiliaire**
Hydraulische Servolenkung mit Servo-Rückstellvorrichtung und Hilfsantrieb
Hydraulic power steering with servo-controlled return mechanism and auxiliary control drive

(30) Priorité: 12.02.1992 FR 9201547
(43) Date de publication de la demande: 18.08.1993
(73) Titulaire: AUTOMOBILES PEUGEOT, F-75116 Paris (FR); AUTOMOBILES CITROEN, F-92200 Neuilly sur Seine (FR)
(72) Inventeur: Dore, Jacques, F-92700 Colombes (FR)
(74) Mandataire: Gendraud, Pierre

(56) Documents cités:
- EP-A- 0 447 626
- DE-A- 4 103 067
- DE-C- 3 037 221
- FR-A- 2 132 948
- US-A- 4 077 486

## Description

L'invention a pour objet une direction à crémaillère assistée hydrauliquement pour véhicule automobile, du type à servocommande dans laquelle la timonerie de direction est actionnée par un vérin alimenté,en fluide sous pression par un boîtier d'assistance (commandé par le volant de direction dans le mode de réalisation selon la revendication 1), équipée d'un dispositif de rappel asservi permettant d'exercer sur le volant de direction un couple de rappel fonction par exemple de la vitesse du véhicule.

Une direction du type tel que défini ci-dessus est décrite dans le brevet français N° FR-A-2 132 948. Dans une telle direction, l'effort au volant pour déplacer les roues est pratiquement nul. Il est donc connu d'exercer un couple de rappel, fonction par exemple de la vitesse du véhicule, sur le volant de direction au moyen d'un vérin agissant sur un ensemble came-galet relié à la colonne de direction et soumis à une pression hydraulique établie par une électrovanne proportionnelle commandée par un calculateur électronique réagissant à différents paramètres, comme la vitesse du véhicule, l'état du sol.

On connaît par ailleurs des dispositifs de commande auxiliaire de direction propres à agir sur la direction du véhicule, par exemple en cas de détection d'obstacles bu de virage (FR-A-2 634 523). Dans ces dispositifs, des moyens de coupure entre le volant de direction et la colonne de direction sont prévus, de manière que le système de commande auxiliaire puisse agir sans avoir à vaincre d'effort supplémentaire. Dans ces conditions, lorsque la direction est entraînée par le système de commande auxiliaire, la liaison entre le volant de direction et la colonne de direction étant interrompue, le conducteur ressent une impression désagréable du fait du volant fou.

L'invention a donc pour objet une direction à crémaillère assistée hydrauliquement pour véhicule automobile, du type à servocommande dans laquelle la timonerie de direction est actionnée par un vérin alimenté en fluide sous pression par un boîtier d'assistance commandé par le volant de direction, équipée d'un dispositif de rappel asservi permettant d'exercer sur le volant de direction un couple de rappel fonction de différents paramètres du véhicule, par exemple la vitesse. Elle est caractérisée en ce qu'elle comporte un mécanisme de commande auxiliaire propre à agir sur la direction en fonction d'ordres émis par un calculateur électronique en cas de détection d'obstacles ou de virages, des moyens de coupure entre un premier arbre de la colonne de direction lié au volant de direction et un deuxième arbre de la colonne de direction relié au pignon engrenant avec la crémaillère, de manière à interrompre sur un ordre reçu du calculateur électronique la liaison entre le volant et la colonne de direction lorsque la direction est commandée par le dispositif de commande auxiliaire, le dispositif de rappel asservi étant prévu sur le premier arbre de la colonne de direction entre le volant de direction et le dispositif de coupure, et en ce que le mécanisme de commande auxiliaire comporte un moteur électrique propre à être commandé par des signaux émis par le calculateur électronique et relié au deuxième arbre de la colonne de direction par un train d'engrenages, un premier capteur étant prévu pour transmettre au calculateur électronique un signal représentant la position du moteur et un deuxième capteur étant prévu pour transmettre au calculateur électronique un signal représentant la position du deuxième arbre de la colonne de direction et par suite de la crémaillère.

Selon une variante définie dans la revendication 6, l'invention a également pour objet une direction du même type mais sans moyens de coupure, les deux arbres étant alors indépendants.

De préférence, le dispositif de coupure est commandé sur un signal émis par le calculateur électronique simultanément au signal émis pour commander le moteur électrique de la commande auxiliaire.

La direction selon l'invention comporte de préférence un capteur prévu pour transmettre au calculateur électronique la position du premier arbre de la colonne de direction et par suite du volant de direction.

De préférence, le dispositif de rappel asservi comporte un ensemble came-galet disposé dans un boîtier et propre à exercer sur le premier arbre de la colonne de direction un couple de rappel fonction de l'effort exercé par un vérin soumis à la pression régulée délivrée par une électrovanne proportionnelle commandée par le calculateur électronique en fonction de paramètres tels que la vitesse du véhicule.

La direction selon l'invention comporte de préférence un deuxième dispositif de rappel asservi constitué de manière connue en soi par un ensemble came-galet disposé dans le boîtier d'assistance hydraulique et propre à exercer sur le deuxième arbre de la colonne de direction un couple de rappel fonction de l'effort exercé par un vérin soumis à la pression délivrée par une électrovanne proportionnelle commandée par le calculateur électronique en fonction de la vitesse du véhicule et en ce que simultanément au signal émis pour commander le moteur électrique de la commande auxiliaire, le calculateur électronique émet un signal à l'électrovanne proportionnelle de manière à ce qu'elle ne délivre plus de pression au vérin, et que le couple de rappel asservi soit supprimé.

On a décrit ci-après, à titre d'exemples non limitatifs, deux modes de réalisation d'une direction par exemple à crémaillère assistée hydrauliquement conforme à l'invention, avec référence aux dessins annexés, dans lesquels:
- la figure 1 représente un premier mode de réalisation de la direction;
- la figure 2 représente un deuxième mode de réalisation.

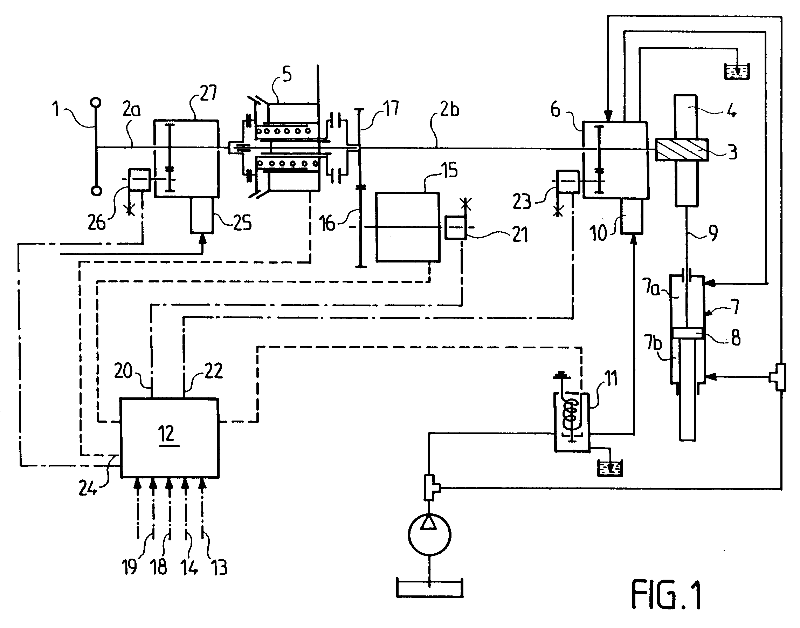

La figure 1 montre une direction à crémaillère assistée hydrauliquement du type à servo-commande et comportant un volant de direction 1, une colonne de direction 2 constituée d'un premier arbre 2a relié au volant 1 et un deuxième arbre 2b portant le pignon de crémaillère 3 coopérant avec la crémaillère 4, un embrayage électromagnétique 5 de coupure, normalement fermé, étant prévu entre les arbres 2a et 2b de la colonne de direction 2.

Le dispositif d'assistance hydraulique comporte de manière connue, par exemple par le brevet français N° 2132948, un boîtier d'assistance 6 susceptible de délivrer du fluide sous pression dans la chambre 7a d'un vérin 7 dans lequel se déplace un piston 8 lié par une tige 9 à la crémaillère 4, la chambre 7b étant alimentée par la source de fluide sous pression.

Le dispositif de rappel asservi destiné à exercer sur le volant un couple de rappel fonction par exemple de la vitesse du véhicule comporte, de manière connue, un vérin 10 propre à agir sur la colonne de direction 2b (par exemple par l'intermédiaire d'un ensemble came-galet, non représenté, disposé à l'intérieur du boîtier d'assistance 6) et soumis à une pression hydraulique régulée établie par une électrovanne proportionnelle 11. Cette électrovanne 11 est connectée à un calculateur électronique 12 qui reçoit différentes informations, telles qu'en 13 un signal représentant la vitesse du véhicule et en 14 un signal représentant le régime moteur ou l'état du sol. L'électrovanne 11 peut donc être parcourue par un courant fonction de ces paramètres du véhicule,par exemple la vitesse, et délivrer une pression hydraulique dans la chambre du vérin 10 fonction de la vitesse du véhicule.

Le mécanisme de commande auxiliaire comporte un moteur électrique 15, par exemple un moteur pas à pas, relié par un train d'engrenages 16-17 à l'arbre 2b de la colonne de direction. Le moteur 15 est connecté au calculateur électronique 12. Ce dernier reçoit par ailleurs en 18 et 19 des signaux représentant par exemple les informations transmises par un système de vision détectant la position du véhicule par rapport à la route ou par tout système de détection de position du véhicule lié à l'infrastructure du réseau routier.

Le calculateur électronique reçoit en outre en 20 un signal transmis par le capteur 21 et représentant la position du moteur électrique 15 et en 22 un signal transmis par le capteur 23 et représentant la position de la crémaillère 4. L'embrayage est connecté en 24 au calculateur électronique 12.

Un deuxième dispositif de rappel asservi est prévu sur l'arbre 2a de la colonne de direction entre le volant 1 et l'embrayage 5. Ce deuxième dispositif comporte un vérin 25 propre à exercer un effort par un ensemble came-galet (non représenté) disposé dans un boîtier 27, sur l'arbre 2a fonction par exemple de la vitesse du véhicule et soumis à une pression régulée hydraulique fournie par un électrovanne proportionnelle (non représentée) connectée au calculateur électronique 12 qui délivre un courant fonction de la vitesse du véhicule. Un capteur 26 est prévu pour transmettre au calculateur 12 un signal représentant la position de l'arbre 2a et par suite du volant de direction 1.

Le fonctionnement de la direction décrite ci-dessus est le suivant:
En fonctionnement normal, le volant de direction entraîne l'arbre 2a qui entraîne l'arbre 2b, l'embrayage 5 étant fermé. La crémaillère 4 est alors déplacée dans le sens voulu par l'intermédiaire du pignon de crémaillère 3, ce déplacement étant commandé par le dispositif de servo-commande disposé dans boîtier d'assistance 6 et délivrant du fluide sous pression dans la chambre 7a du vérin 7 de manière à déplacer le piston 8 lié à la crémaillère 4 par la tige 9 dans le sens voulu.

Par ailleurs, le calculateur électronique 12 transmet un courant fonction des différents paramètres du véhicule, par exemple la vitesse, à l'électrovanne 11 qui délivre ainsi dans la chambre du vérin 10 une pression hydraulique proportionnelle à la vitesse du véhicule. Le vérin 10 peut donc exercer sur l'arbre 2b de la colonne de direction et par suite sur le volant 1 un couple de rappel fonction de cette pression donc de la vitesse du véhicule.

En cas d'anomalie, lorsque le calculateur électronique 12 reçoit en 18 ou 19 des signaux des dispositifs de détection indiquant par exemple une mauvaise position du véhicule par rapport à la voie matérialisée sur la chaussée, le calculateur 12 envoie alors un signal au moteur électrique 15 de manière à agir sur la crémaillère 4 par l'intermédiaire du train d'engrenages 16-17,de l'arbre 2b de la colonne de direction et du dispositif d'assistance 6.

Simultanément, le calculateur envoie des ordres:
- A l'embrayage 5 de manière à interrompre la liaison entre l'arbre 2a et l'arbre 2b de la colonne de direction.
- A l'électrovanne 11 de manière à supprimer l'alimentation du vérin 10 et par suite le couple de rappel qu'il exerce sur l'arbre 2b de la colonne de direction. L'effort nécessaire au moteur 15 pour entraîner l'arbre 2b sera donc beaucoup plus faible, ce qui a pour avantage de diminuer la puissance nécessaire du moteur 15.
- A l'électrovanne délivrant au vérin 25 une pression hydraulique régulée fonction des différents paramètres du véhicule, par exemple la vitesse, de manière à exercer sur l'arbre 2a et par suite sur le volant de direction 1 un couple de rappel fonction de la vitesse du véhicule. Le volant 1 n'étant plus relié à la crémaillère, puisque l'embrayage 5 est ouvert, le conducteur n'a pas ainsi la désagréable sensation d'un volant fou.

Le calculateur 12 recevant par le capteur 26 un signal transmettant la position du volant, peut en fonction des autres signaux 18-19 et des signaux transmis par les capteurs 21 sur la position du moteur, et 23 sur la position de la crémaillère, piloter le moteur 15.

Cette disposition est particulièrement avantageuse par le fait que l'ensemble de rappel asservi est compact et nécessite très peu d'énergie. Cette disposition, grâce à l'embrayage 5, permet d'avoir une direction assistée classique. Par ailleurs, elle diminue fortement le coût et la taille du moteur et des organes électroniques de commande. De plus, l'inertie du moteur étant faible, elle n'est pas ressentie comme un gêne lors des mouvements rapides du volant de direction, le moteur étant alors entraîné par le train d'engrenage 16-17.

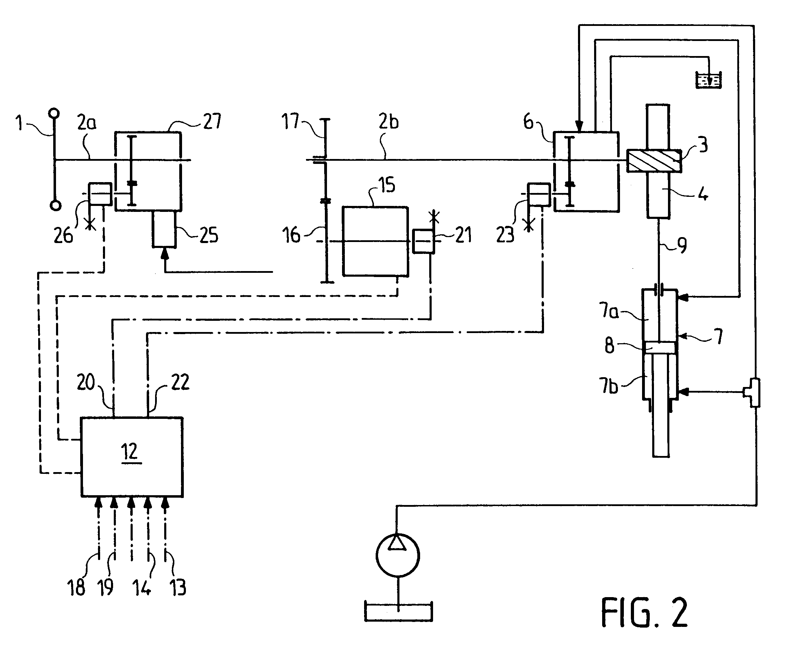

La direction représentée à la figure 2 présente une coupure permanente entre les arbres 2a et 2b de la colonne de direction puisque l'embrayage 5 a été supprimé. La crémaillère 4 est toujours entraînée par le moteur 15, par l'intermédiaire du train d'engrenages 16-17, le moteur 15 étant piloté par le calculateur électronique 12 qui reçoit les informations sur la position du volant par le capteur 26. L'arbre 2b n'étant plus relié directement au volant, le dispositif de rappel asservi (électrovanne 11 et vérin 10 agissant sur l'ensemble came-galet) prévu au niveau du boîtier d'assistance 6 n'est plus nécessaire.

Le fonctionnement d'une telle direction est le suivant:
L'action du conducteur sur le volant est transmise au calculateur électronique 12 grâce au capteur de position 26. Le calculateur électronique 12 pilote le moteur 15 en fonction des informations reçues du capteur 26 sur la position du volant, du capteur 23 sur la position de la crémaillère 4, des signaux transmis en 18 et 19 pour les différents dispositifs de détection, et en 13 et 14 sur la vitesse du véhicule, de l'état du sol ou du régime moteur, et par le capteur 21 sur la position du moteur 15.

Le conducteur n'a pas la sensation d'un volant fou puisque le dispositif de rappel asservi fonction des différents paramètres du véhicule est prévu grâce au vérin 25 qui exerce sur l'arbre 2a un couple de rappel par l'intermédiaire d'un ensemble came-galet (non représenté) disposé dans le boîtier 27. Le vérin 25 reçoit une pression régulée délivrée par une électrovanne proportionnelle non représentée pilotée par le calculateur électronique 12 en fonction par exemple de la vitesse du véhicule.

Il va de soi que la présente invention ne doit pas être considérée comme limitée aux modes de réalisation décrits et représentés, mais en couvre, au contraire, toutes les variantes. Par exemple, dans le cas d'un véhicule à quatre roues directrices, les roues avant pourraient être commandées suivant la disposition représentée à la figure 1 tandis que les roues arrière pourraient être commandées suivant la disposition représentée à la figure 2.

## Revendications

1. Direction à crémaillère assistée hydrauliquement pour véhicule automobile, du type à servocommande dans laquelle la timonerie de direction est actionnée par un vérin (7) alimenté en fluide sous pression par un boîtier d'assistance (6) commandé par le volant de direction (1), équipée d'un dispositif de rappel asservi permettant d'exercer sur le volant de direction (1) un couple de rappel fonction de différents paramètres du véhicule, par exemple la vitesse, caractérisée en ce qu'elle comporte un mécanisme de commande auxiliaire propre à agir sur la direction en fonction d'ordres émis par un calculateur électronique (12) en cas de détection d'obstacles ou de virages, des moyens de coupure (5) entre un premier arbre (2a) de la colonne de direction lié au volant de direction (1) et un deuxième arbre (2b) de la colonne de direction relié au pignon (3) engrenant avec la crémaillère(4), de manière à interrompre sur un ordre reçu du calculateur électronique (12) la liaison entre le volant (1) et la colonne de direction lorsque la direction est commandée par le dispositif de commande auxiliaire, le dispositif de rappel asservi étant prévu sur le premier arbre (2a) de la colonne de direction entre le volant de direction (1) et le dispositif de coupure (5),et en ce que le mécanisme de commande auxiliaire comporte un moteur électrique (15) propre à être commandé par des signaux émis par le calculateur électronique (12) et relié au deuxième arbre (2b) de la colonne de direction par un train d'engrenages (16-17), un premier capteur (21) étant prévu pour transmettre au calculateur électronique (12) un signal (20) représentant la position du moteur et un deuxième capteur (23) étant prévu pour transmettre au calculateur électronique (12) un signal (22) représentant la position du deuxième arbre (2b) de la colonne de direction et par suite de la crémaillère (4).

2. Direction selon la revendication 1, caractérisée en ce que le dispositif de coupure (5) est commandé par un signal émis par le calculateur électronique (12) simultanément au signal émis pour commander le moteur électrique (15) de la commande auxiliaire.

3. Direction selon l'une des revendications 1 ou 2, caractérisée en ce qu'un capteur (26) est prévu pour transmettre au calculateur électronique (12) la position du premier arbre (2a) de la colonne de direction (2) et par suite du volant de direction (1).

4. Direction selon l'une quelconque des revendications précédentes, caractérisée en ce que le dispositif de rappel asservi comporte un ensemble came-galet disposé dans un boîtier (27) et propre à exercer sur le premier arbre (2a) de la colonne de direction (2) un couple de rappel fonction de l'effort exercé par un vérin (25) soumis à la pression régulée délivrée par une électrovanne proportionnelle commandée par le calculateur électronique (12) en fonction de paramètres tels que la vitesse du véhicule.

5. Direction selon l'une quelconque des revendications précédentes, caractérisée en ce qu'est prévu un deuxième dispositif de rappel asservi comportant de manière connue en soi un ensemble came-galet disposé dans le boîtier d'assistance hydraulique (6) et propre à exercer sur le deuxième arbre (2b) de la colonne de direction (2) un couple de rappel fonction de l'effort exercé par un vérin (10) soumis à la pression délivrée par une électrovanne proportionnelle (11) commandée par le calculateur électronique (12) en fonction de paramètres tels que la vitesse du véhicule et en ce que simultanément au signal émis pour commander le moteur électrique (15) de la commande auxiliaire, le calculateur électronique (12) émet un signal à l'électrovanne (11) de manière à ce qu'elle ne délivre plus de pression au vérin (10), et que le couple de rappel asservi soit supprimé.

6. Direction à crémaillère assistée hydrauliquement pour véhicule automobile, du type à servocommande dans laquelle la timonerie de direction est actionnée par un vérin (7) alimenté en fluide sous pression par un boîtier d'assistance (6), équipée d'un dispositif de rappel asservi permettant d'exercer sur le volant de direction (1) un couple de rappel fonction de différents paramètres du véhicule, par exemple la vitesse, caractérisée en ce qu'elle comporte un mécanisme de commande auxiliaire propre à agir sur la direction en fonction d'ordres émis par un calculateur électronique (12), un premier arbre (2a) de la colonne de direction (2) lié au volant de direction (1) et équipé d'un premier dispositif de rappel asservi et un deuxième arbre (2b) de la colonne de direction (2) relié au pignon (3) engrenant avec la crémaillère (4) et équipé d'un deuxième dispositif de rappel asservi, les arbres (2a) et (2b) étant indépendants, et en ce que le mécanisme de commande auxiliaire comporte un moteur électrique (15) propre à être commandé par des signaux émis par le calculateur électronique (12) et relié au deuxième arbre (2b) de la colonne de direction par un train d'engrenages (16-17), et en ce que sont prévus un premier capteur (21) pour transmettre au calculateur électronique (12) un signal (20) représentant la position du moteur, un deuxième capteur (23) pour transmettre au calculateur électronique (12) un signal (22) représentant la position de l'arbre (2b) de la colonne de direction (2) et par suite de la crémaillère (4) et un troisième capteur (26) pour transmettre au calculateur électronique la position de l'arbre (2a) de la colonne de direction (2) et par suite du volant (1) de direction.

## Claims

1. Hydraulically assisted rack steering gear for a motor vehicle, of the servocontrol type, in which the steering link is actuated by a power cylinder (7) supplied with fluid under pressure by an assistance box (6) controlled by the steering wheel (1), said steering link being provided with a slaved restoring device making it possible to exert on the steering wheel (1) a restoring torque that is a function of various parameters of the vehicle, for example the speed, characterised in that it comprises an ancillary control mechanism suitable for acting on the steering gear as a function of orders emitted by an electronic computer (12) where obstacles or bends are detected, disconnection means (5) between a first shaft (2a) of the steering column linked to the steering wheel (1) and a second shaft (2b) of the steering column connected to the pinion (3) meshing with the rack (4), so that, when an order is received from the electronic computer (12), the link between the steering wheel (1) and the steering column is broken when the steering is controlled by the ancillary control device, the slaved restoring device being provided on the first shaft (2a) of the steering column between the steering wheel (1) and the disconnection device (5), and in that the ancillary control mechanism comprises an electric motor (15) capable of being controlled by signals emitted by the electronic computer (12) and connected to the second shaft (2b) of the steering column by a train of gears (16-17), a first sensor (21) being provided in order to transmit to the electronic computer (12) a signal (20) representing the position of the motor and a second sensor (23) being provided in order to transmit to the electronic computer (12) a signal (22) representing the position of the second shaft (2b) of the steering column and consequently of the rack (4).

2. Steering gear according to Claim 1, characterised in that the disconnection device (5) is controlled by a signal emitted by the electronic computer (12) simultaneously with the signal emitted in order to control the electric motor (15) of the ancillary control.

3. Steering gear according to one of Claims 1 or 2, characterised in that a sensor (26) is provided in order to transmit to the electronic computer (12) the position of the first shaft (2a) of the steering column (2) and consequently of the steering wheel (1).

4. Steering gear according to any one of the preceding claims, characterised in that the slaved restoring device comprises a cam/roller assembly arranged in a housing (27) and capable of exerting on the first shaft (2a) of the steering column (2) a restoring torque that is a function of the effort exerted by a power cylinder (25) subject to regulated pressure delivered by a proportional solenoid valve controlled by the electronic computer (12) as a function of parameters such as the speed of the vehicle.

5. Steering gear according to any one of the preceding claims, characterised in that a second slaved restoring device is provided comprising, in a manner known in itself, a cam/roller assembly arranged in the hydraulic assistance box (6) and capable of exerting on the second shaft (2b) of the steering column (2) a restoring torque that is a function of the effort exerted by a power cylinder (10) subject to the pressure delivered by a proportional solenoid valve (11) controlled by the electronic computer (12) as a function of parameters such as the speed of the vehicle and in that, simultaneously with the signal emitted to control the electric motor (15) of the ancillary control, the electronic computer (12) emits a signal to the solenoid valve (11) so that it no longer delivers pressure to the power cylinder (10), and that the slaved restoring torque is eliminated.

6. Hydraulically assisted rack steering gear for a motor vehicle, of the servocontrol type, in which the steering link is actuated by a power cylinder (7) supplied with fluid under pressure by an assistance box (6), said steering link being provided with a slaved restoring device making it possible to exert on the steering wheel (1) a restoring torque that is a function of various parameters of the vehicle, for example the speed, characterised in that it comprises an ancillary control mechanism capable of acting on the steering gear as a function of orders emitted by an electronic computer (12), a first shaft (2a) of the steering column (2) linked to the steering wheel (1) and provided with a first slaved restoring device and a second shaft (2b) of the steering column (2) connected to the pinion (3) meshing with the rack (4) and provided with a second slaved restoring device, the shafts (2a) and (2b) being independent, and in that the ancillary control mechanism comprises an electric motor (15) capable of being controlled by signals emitted by the electronic computer (12) and connected to the second shaft (2b) of the steering column by a train of gears (16-17), and in that there are provided a first sensor (21) for transmitting to the electronic computer (12) a signal (20) representing the position of the motor, a second sensor (23) for transmitting to the electronic computer (12) a signal (22) representing the position of the shaft (2b) of the steering column (2) and consequently of the rack (4) and a third sensor (26) for transmitting to the electronic computer the position of the shaft (2a) of the steering column (2) and consequently of the steering wheel (1).

## Patentansprüche

1. Hydraulische Kraftfahrzeug-Zahnstangen-Servolenkung, der Art nach mit Servosteuerung, in der das Lenkgestänge von einem Zylinder (7) betätigt wird, der durch ein Servogehäuse (6), das vom Lenkrad (1) gesteuert wird, mit unter Druck stehendem Strömungsmittel gespeist wird, und die ausgestattet ist mit einer Servo-Rückstellvorrichtung, die es gestattet, auf das Lenkrad (1) ein Rückstellmoment auszuüben, das eine Funktion unterschiedlicher Parameter des Fahrzeugs ist, beispielsweise der Geschwindigkeit, dadurch gekennzeichnet, daß sie einen Hilfssteuermechanismus aufweist, der dazu eingerichtet ist, auf die Lenkung als Funktion von Anweisungen einzuwirken, die von einem elektronischen Rechner (12) im Fall der Erfassung von Hindernissen oder Kurven ausgegeben werden, sowie Trennmittel (5) zwischen einer ersten Welle (2a) der Lenksäule, die mit dem Lenkrad (1) verbunden ist, und einer zweiten Welle (2b) der Lenksäule, die mit dem Ritzel (3) verbunden ist, das in Eingriff mit der Zahnstange (4) steht, und zwar derart, daß auf eine vom elektronischen Rechner (12) empfangene Anweisung hin die Verbindung zwischen dem Lenkrad (1) und der Lenksäule unterbrochen wird, wenn die Lenkung von der Hilfssteuervorrichtung gesteuert wird, wobei die Servo-Rückstellvorrichtung an der ersten Welle (2a) der Lenksäule zwischen dem Lenkrad (1) und der Trennvorrichtung (5) vergesehen ist, und daß der Hilfssteuermechanismus einen Elektromotor (15) aufweist, der dazu eingerichtet ist, von Signalen gesteuert zu werden, die vom elektronischen Rechner (12) ausgesendet werden, und der mit der zweiten Welle (2b) der Lenksäule durch einen Getriebestrang (16-17) verbunden ist, wobei ein erster Meßfühler (21) vorgesehen ist, um an den elektronischen Rechner (12) ein Signal (20) zu übertragen, das die Position des Motors darstellt, und ein zweiter Meßfühler (23) vorgesehen ist, um an den elektronischen Rechner (12) ein Signal (22) zu übertragen, das die Position der zweiten Welle (2b) der Lenksäule und demzufolge der Zahnstange (4) darstellt.

2. Lenkung nach Anspruch 1, dadurch gekennzeichnet, daß die Trennvorrichtung (5) von einem Signal gesteuert wird, das durch den elektronischen Rechner (12) gleichzeitig mit einem Signal ausgesendet wird, das zum Steuern des Elektromotors (15) der Hilfssteuerung ausgesendet wird.

3. Lenkung nach einem der Ansprüche 1 oder 2, dadurch gekennzeichnet, daß ein Meßfühler (26) vorgesehen ist, um an den elektronischen Rechner (12) die Position der ersten Welle (2a) der Lenksäule (2) und demzufolge des Lenkrades (1) zu übertragen.

4. Lenkung nach irgendeinem der vorangehenden Ansprüche, dadurch gekennzeichnet, daß die Servo-Rückstellvorrichtung eine Nocken-Rollen-Anordnung aufweist, die in einem Gehäuse (27) angeordnet ist und dazu eingerichtet ist, auf die erste Welle (2a) der Lenksäule (2) ein Rückstellmoment auszuüben, das eine Funktion der Kraft ist, die von einem Zylinder (25) ausgeübt wird, der dem regulierten Druck ausgesetzt ist, der durch ein Proportional-Elektroventil abgegeben wird, das vom elektronischen Rechner (12) als Funktion von Parametern wie etwa der Geschwindigkeit des Fahrzeugs gesteuert wird.

5. Lenkung nach irgendeinem der vorangehenden Ansprüche, dadurch gekennzeichnet, daß eine zweite Servo-Rückstellvorrichtung vorgesehen ist, die in an sich bekannter Weise eine Nocken-Rollen-Anordnung aufweist, die im hydraulischen Servogehäuse (6) angeordnet und dazu eingerichtet ist, auf die zweite Welle (2b) der Lenksäule (2) ein Rückstellmoment auszuüben, das eine Funktion der Kraft ist, die von einem Zylinder (10) ausgeübt wird, der dem Druck ausgesetzt ist, der durch ein Proportional-Elektroventil (11) abgegeben wird, das vom elektronischen Rechner (12) als Funktion von Parametern wie etwa der Geschwindigkeit des Fahrzeugs gesteuert wird, und daß gleichzeitig mit dem Signal, das zum Steuern des Elektromotors (15) der Hilfssteuerung ausgesendet wird, der elektronische Rechner (12) ein Signal an das Elektroventil (11) derart abgibt, daß es keinen Druck mehr an den Zylinder (10) abgibt, und daß das Servo-Rückstellmoment unterdrückt wird.

6. Hydraulische Kraftfahrzeug-Zahnstangen-Servolenkung, der Art nach mit Servosteuerung, in der das Lenkgestänge von einem Zylinder (7) betätigt wird, der durch ein Servogehäuse (6) mit unter Druck stehendem Strömungsmittel gespeist wird und die ausgestattet ist mit einer Servo-Rückstellvorrichtung, die es gestattet, auf das Lenkrad (1) ein Rückstellmoment auszuüben, das eine Funktion unterschiedlicher Parameter des Fahrzeugs ist, beispielsweise der Geschwindigkeit, dadurch gekennzeichnet, daß sie einen Hilfssteuermechanismus aufweist, der dazu eingerichtet ist, auf die Lenkung als Funktion von Anweisungen einzuwirken, die von einem elektronischen Rechner (12) ausgegeben werden, eine erste Welle (2a) der Lenksäule (2), die mit dem Lenkrad (1) verbunden und mit einer ersten Rückstell-Servovorrichtung ausgestattet ist, sowie eine zweite Welle (2b) der Lenksäule (2), die mit dem Ritzel (3) verbunden ist, das in Eingriff mit der Zahnstange (4) steht und mit einer zweiten Servo-Rückstellvorrichtung ausgestattet ist, wobei die Wellen (2a) und (2b) unabhängig sind, und daß der Hilfssteuermechanismus einen Elektromotor (15) aufweist, der dazu eingerichtet ist, von Signalen gesteuert zu werden, die vom elektronischen Rechner (12) ausgesendet werden, und der mit der zweiten Welle (2b) der Lenksäule durch einen Getriebestrang (16-17) verbunden ist, und daß ein erster Meßfüher (21) vorgesehen ist, um an den elektronischen Rechner (12) ein erstes Signal (20) zu übertragen, das die Position des Motors darstellt, ein zweiter Meßfühler (23), um an den elektronischen Rechner (12) ein Signal (22) zu übertragen, das die Position der Welle (2b) der Lenksäule (2) und demzufolge der Zahnstange (4) darstellt, sowie ein dritter Meßfühler (26), um an den elektronischen Rechner die Position der Welle (2a) der Lenksäule (12) und demzufolge des Lenkrades (1) zu übertragen.
